(19) Europäisches Patentamt
European Patent Office
Office européen des brevets

(11) **EP 1 733 567 B1**

(12) **EUROPEAN PATENT SPECIFICATION**

(45) Date of publication and mention of the grant of the patent:
**25.06.2014 Bulletin 2014/26**

(51) Int Cl.:
*H04W 16/18* (2009.01)     *H04W 24/02* (2009.01)

(21) Application number: **05724427.9**

(86) International application number:
**PCT/US2005/006882**

(22) Date of filing: **04.03.2005**

(87) International publication number:
**WO 2005/104602 (03.11.2005 Gazette 2005/44)**

(54) **SYSTEM, UNIT AND METHOD OF FREQUENCY RE-PLANNING**

SYSTEM, EINHEIT UND VERFAHREN ZUR FREQUENZNEUPLANUNG

SYSTEME, UNITE ET PROCEDE DE REPLANIFICATION DES FREQUENCES

(84) Designated Contracting States:
**AT BE BG CH CY CZ DE DK EE ES FI FR GR HU IE IS IT LI LT LU MC NL PL PT RO SE SI SK TR**
Designated Extension States:
**AL BA HR LV MK YU**

(30) Priority: **26.03.2004 GB 0406806**

(43) Date of publication of application:
**20.12.2006 Bulletin 2006/51**

(73) Proprietor: **Motorola Mobility LLC Libertyville, IL 60048 (US)**

(72) Inventors:
 • **WILLIAMS, Olatunde,**
   **Swindon Wiltshire SN25 4XY (GB)**
 • **BRUSCH, Simon,**
   **Swindon Wiltshire SN25 4XY (GB)**
 • **CHARITY, Timothy,**
   **Swindon Wiltshire SN25 4XY (GB)**
 • **HANNA, Trevor,**
   **Swindon Wiltshire SN25 4XY (GB)**
 • **HOPKINSON, Jonathan N.,**
   **Swindon Wiltshire SN25 4XY (GB)**
 • **MATHEWS, John,**
   **Swindon Wiltshire SN25 4XY (GB)**
 • **RAMSDEN, Jason,**
   **Swindon Wiltshire SN25 4XY (GB)**
 • **RATFORD, Michael S.,**
   **Swindon Wiltshire SN25 4XY (GB)**

(74) Representative: **Jepsen, René Pihl et al Eltima Consulting Grove House, Lutyens Close' Chineham Court Basingstoke, Hants RG24 8AG (GB)**

(56) References cited:
**GB-A- 2 332 600      GB-A- 2 356 320**
**US-A- 5 966 657      US-A- 6 128 473**
**US-B1- 6 253 086     US-B1- 6 405 036**
**US-B1- 6 442 387**

**Description**

Technical Field

The invention relates to a system, unit and method of frequency re-planning. In particular, it relates to a system, unit and method of frequency re-planning based upon measurement reports.

Background

Wireless communication systems such as cellular or private mobile radio communication systems typically provide for radio communication links to be arranged between a plurality of base transceiver stations (BTSs) and a plurality of subscriber units, often termed mobile stations (MSs).

In a wireless communication system, each BTS has associated with it a particular geographical coverage area (or cell). In large cellular communication systems, many cells are used and are typically overlapped to produce an extensive composite coverage area. The main factor defining the coverage area in which a BTS can maintain acceptable communications with MSs is the BTS transmitter power level.

In such a cellular system with overlapping adjacent cells, the frequencies used in particular cells are generally selected to minimise a level of radio interference generated in adjacent cells. This selection process usually occurs during a network design phase.

A network design based on cells is typically based on an idealised cell pattern. However, an idealised cell pattern rarely occurs in practice, due for example to the nature of the terrain resulting in varying radio propagation environments, and the fact that cell sites and antennae are not ideally located on a regular grid pattern.

The network designer therefore uses frequency-planning tools to estimate the radio propagation for each cell and predict a corresponding coverage area. Based on these propagation models, the network designer is able to develop a frequency plan for the network intended to minimise the expected interference between overlapping cells. The frequency plan considers such factors as antenna height and location, terrain topology, transmitted power levels and the anticipated number of subscribers.

The quality of frequency plan that can be produced by such traditional coverage prediction techniques is constrained by the degree of coverage overlap between cells. Greater overlap means greater potential interference, making it more difficult to produce a low interference frequency plan.

A known method of frequency planning that incorporates a consideration interference employs a channel allocation algorithm in conjunction with a carrier-to-interference (C/I) penalty matrix. An example of such a method is disclosed in GB 2 332 600A.

Achieving an optimum frequency plan (or re-plan) therefore becomes dependent on the C/I matrix accuracy, and hence it is inaccuracies in C/I matrices that ultimately lead to unexpected interference when using such methods.

There are a number of reasons why traditionally produced matrices are inaccurate. For example, the matrices are based on predicted interference levels at ground level, and so subscribers in high buildings are not considered. Additionally, they typically do not reflect the impact of detailed clutter data, such as street canyons. They assume fixed cell boundaries whereas the characteristics of MSs and handover algorithms are such that cell boundaries can move. Also, they are reliant on accurate site and antenna data that is rarely available.

Furthermore, these coverage prediction techniques tend to focus on geographic coverage area, assuming an even distribution of MSs within the cell rather than subscriber-based or 'traffic' coverage wherein subscribers are unevenly distributed across a cell. This inaccuracy limits the effectiveness of the predictions and the resulting decisions made therefrom. In turn, this means that the network is sub-optimally configured and therefore typically delivers a sub-optimal quality of service.

However, an alternative method of generating a C/I matrix is known in the art that comprises collating measurement reports (MRs) sent by mobile stations. MRs typically comprise the downlink signal strengths of the BTS serving the cell of a given MS, together with the downlink signal strengths of BTSs from neighbouring cell detected by the MS. By collating a statistically significant number of such MRs, the relative strengths of the BTSs in and around a given cell can be used to generate a more accurate C/I value for that cell, based on the actual observations of MSs served by the cell and thus transparent to their physical distribution within it.

If this is performed for a number of overlapping cells, the resulting C/I matrix can be used for frequency replanning (for example, due to the addition/maintenance/removal of base stations, or to account for seasonal variations in traffic). This is termed an 'intelligent optimisation system' (IOS).

IOS has a number of advantages, most notably the removal of a need to model, measure or assume the geographical distribution of MSs within a cell, which as previously noted is a prime contributor to the inaccuracy of traditional frequency planning tools.

However, the use of measurement reports raises some new considerations:

Notably, in current systems an MS cannot report a neighbour if that neighbour is using the same broadcast control channel (BCCH) frequency as the BTS of the MSs serving cell. Consequently one cannot directly generate a C/I penalty value for such neighbours from MRs.

Additionally, MRs only provide downlink signal strengths for neighbouring cells. If the interference experienced by uplink traffic is uncorrelated, it is desirable to construct or modify a C/I matrix to reflect both downlink and uplink interference. However, currently there is no direct means of obtaining uplink receive levels for MSs of neighbouring cells using MRs.

In a similar vein, MRs are based on the broadcast control channel signal strength of the different cells, but it is desirable to produce C/I matrices that reflect the traffic channel interference.

Finally, the preference for a statistically significant number of measurement reports means that if too few MRs are received during a given sampling period, a resulting C/I value or values may not be sufficiently accurate.

The purpose of the present invention is to alleviate some or all of the above problems.

Summary of the Invention

In a first aspect, the present invention provides a method of frequency re-planning in a wireless communication system, as claimed in claim 1.

In a third aspect, the present invention provides a wireless communication system, as claimed in claim 7.

In a fifth aspect, the present invention provides a communication unit, as claimed in claim 11.

Further features of the present invention are as defined in the dependent claims.

Embodiments of the present invention will now be described by way of example with reference to the accompanying drawing, in which:

Brief description of the drawing

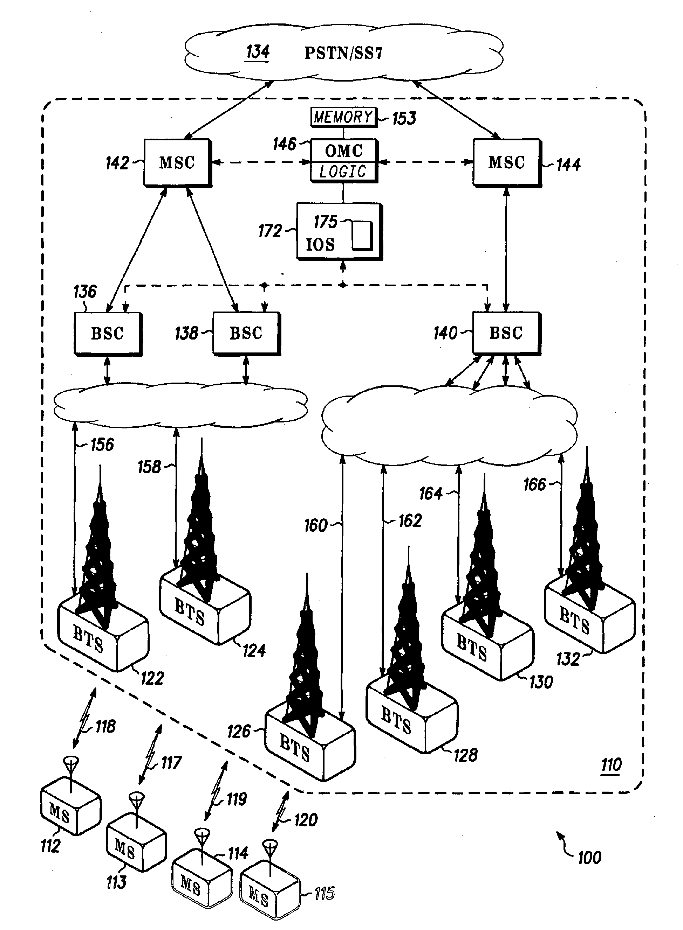

FIG. 1 illustrates a block diagram of a cellular radio communications system in accordance with an embodiment of the present invention.

Detailed description

A system, unit and method of frequency re-planning in a wireless communication system is disclosed.

In FIG. 1, a multi-layer cellular telephone communication system 100 is shown supporting a Global System for Mobile communication (GSM) air-interface, in accordance with an embodiment of the present invention. The European Telecommunications Standards Institute (ETSI) has defined the GSM air-interface. The multi-layer cellular system is shown in a simplified form, with only a limited number of system elements shown for clarity. It will be clear to a person skilled in the art that other air interfaces may be used instead.

Generally, the air-interface protocol is administered from base transceiver stations (BTSs) 122-132 within the system architecture 110. BTSs are generally geographically spaced apart - one base station supporting a cell (or, optionally, sectors of a cell).

A plurality of mobile stations (MSs) 112-115 is shown as communicating over the selected air-interface 117-120 with a plurality of BTSs 122-132. A limited number of MSs 112-115 and BTSs 122-132 are shown for clarity purposes only.

The BTSs 122-132 may be connected to a conventional public-switched telephone network (PSTN) 134 through base station controllers (BSCs) 136-140 and mobile switching centres (MSCs) 142-144. Each BTS 122-132 is principally intended to serve its primary cell, with each BTS 122-132 containing one or more transceiver units to communicate over communication links 156-166 with the rest of the cellular system infrastructure.

Each BSC 136-140 may control one or more BTSs 122-132, with BSCs 136-140 generally interconnected through MSCs 142-144. Processes within the MSCs are provided to account for the situation where an MS (112-115) passes between two BTS serving areas, for example MS 112 moving from an area covered by BTS 122 to an area covered by BTS 124, where the two BTSs are controlled by different BSCs (BSC 136 and BSC 138 in this example).

Each MSC 142-144 provides a gateway to the PSTN 134, with MSCs 142-144 interconnected through an operations and management centre (OMC) 146 that administers general control of the cellular telephone communication system 100, as will be understood by those skilled in the art.

In operation, an initial frequency re-use plan is set by an intelligent optimisation system (IOS) 172 and notified to the OMC 146. The OMC 146 commands the BTSs 122-132 via their BSCs 136-140 to set their operating frequencies accordingly.

In accordance with an embodiment of the present invention, an intelligent optimisation system (IOS) 172 is operably coupled to the OMC 146 and the base station controllers 136-140.

The IOS collates a statistically significant number of measurement reports in order to generate a C/I penalty matrix.

However, as noted previously, when a first cell has a neighbour operating on the same BCCH frequency, MSs within the first cell will not report measurements for that neighbour. This can lead to gaps in the C/I penalty matrix.

In accordance with an embodiment of the present invention, in this circumstance the IOS (172) employs the following method to populate such gaps with estimated penalty values;

For a first serving cell having one or more neighbouring co-channel cells for which measurement reports are unavailable, C/I penalties are estimated for the one or more neighbouring co-channel cells based upon the interference levels of common neighbours of the first serving cell and the one or more neighbouring co-channel cells.

To illustrate, consider the C/I penalty matrix below for the situation where, of neighbouring cells A - D, it so happens that cells A, B and C share the same BCCH frequency;

|  |  | Server | | | |
| --- | --- | --- | --- | --- | --- |
|  |  | A | B | C | D |
| N'bour | A | - | ? | ? | 50 |
|  | B | ? | - | ? | 50 |
|  | C | ? | ? | - | 10 |
|  | D | 50 | 50 | 10 | - |

To infer the effect of interference by B and C on A, for example, one can note that as the interference to common neighbour D is greater from B than from C, then the effect on A is likely to also be greater from B than from C.

In practice there will generally be a number of common neighbours, allowing a co-ordination of this information to provide a good indication of which co-channel neighbours are more likely to be causing interference.

Formally, this may be achieved as follows;

For a server *s* and a co-channel neighbour *n* (i.e. with co-channel BCCH frequencies), the co-channel interference (CCI) on server s caused by co-channel neighbour *n* is calculated substantially as

$$CCI(s, n) = \sum_i \{CCI(s, i) . CCI(i, n)\}$$

where there are *1..i* common neighbours, CCI(s,i) is the interference overlap on server *s* from common neighbour *i*, and CCI(i,n) is the interference overlap on common neighbour *i* from co-channel neighbour *n*.

Typically, the co-channel interference values will only be derivable for voice, but it is envisaged that separate co-channel interference values will be calculable for other forms of traffic, such as general packet radio service (GPRS) data, if the relevant interference overlap information is available. Thus one can for example distinguish versions of CCI(s, n) as CV(s,n) and CG(s,n) for voice and GPRS traffic respectively.

If only voice co-channel interference values are available, then the interference penalty on serving cell carrier *x* caused by co-channel neighbour carrier *y* is then calculated substantially as

$$penalty(s, x, n, y) = CV(s, n) * TU(s, x) * TU(n, y) * C \qquad Eq. 1$$

where server traffic utilisation *TU(s,x) = Voice _ Utilisation(s, x) + GPRS Utilisation(s, x);* co-channel neighbour traffic utilisation *TU(n,y) = Voice _ Utilisation(ny) * dtx _ factor(n, y) + GPRS Utilisation(n, y);*
and C is a constant, typically 7000, used to generate a penalty value in terms of milli-Erlangs.
The dtx_factor compensates for discontinuous transmission in the co-channel neighbour.

Alternatively, if co-channel interference values are available for different traffic types, then penalties can be calculated including these values explicitly. For example, GPRS typically needs a cleaner channel than voice and so it may be desirable to produce an alternative penalty for the case of voice and GPRS traffic. This may be calculated substantially as

$$penalty(s, x, n, y) =$$
$$(CV(s, n) * VU(s, x) + CG(s, n) * GU(s, x))$$
$$* TU(n, y) * C$$

where

> $VU(s, x) = voice \_ utilisation(s, x)$
> $GU(s, x) = GPRS \_ utilisation(s, x).$

It will be clear to a person skilled in the art that the traffic utilisation (TU) may comprise a number of forms of traffic in addition to or instead of voice and GPRS, or may comprise only voice. Thus more generally,

$$penalty(s, x, n, y) =$$
$$(CCI_1(s, n) * TU_1(s, x) + CCI_2(s, n) * TU_2(s, x) + \ldots + CCI_k(s, n) * TU_k(s, x))$$
$$* TU(n, y) * C$$

where $CCI_{1..k}$ and $TU_{1..k}$ are co-channel interference values and traffic utilisation values respectively for k forms of traffic.
It will be clear to a person skilled in the art that forms of traffic for which no specific co-channel interference values exist may be accommodated using an appropriate available co-channel interference value, as seen for example in Eq. 1 for the case where a GPRS value was unavailable and so GPRS traffic was added together with voice traffic.
The method as disclosed above may also be applied to calculate adjacent channel interference penalties, using adjacent-channel interference (ACI) values instead of co-channel interference values, the ACI values calculated substantially as

$$ACI(s, n) = \sum_i ACI(s, i) . ACI(i, n)$$

and used as per CCI(s,n).
Having obtained a fully populated C/I matrix for download signal strength on the BCCH, one may calculate a complementary set of factors reflecting uplink channel interference.
In an embodiment of the present invention, one may obtain for a given serving cell s a probability density function of uplink receive levels (UL_RxLev) for mobile stations being served by that cell, and for mobile stations being served by each neighbour $n$ of that cell.
For mobile stations (MSs) served by the serving cell, UL_RxLev is included in the measurement report (MR) and so directly obtainable.
For an MS served by a neighbour, however, an equivalent value must be calculated.
If an MS served by a neighbour lists a cell in its MR, the recorded downlink signal strength is used to calculate an estimate of UL_RxLev substantially as follows;

$$UL\_RxLev = MS\_TxPwr - (BS\_TxPwr - DL\_RxLev)$$

where

> $MS\_TxPwr$ is the MS transmission power;
> $BS\_TxPwr$ is the transmission power of the cell's BCCH; and
> $DL\_RxLev$ is the download signal strength recorded in the MR.

This calculation assumes that the path loss between base station and MS is reciprocal, but in practice the uplink pathloss tends to be less due to signal diversity from the MS. This can be reflected by a diversity gain factor as follows;

$$UL\_RxLev = MS\_TxPwr - (BS\_TxPwr - DL\_RxLev) + DG\_Factor$$

where

> $DG\_Factor$ = Average(Downlink_Pathloss - Uplink_Pathloss), the average being over some representative geographical area.

The DG_Factor is dependent upon the accuracy of transceiver calibrations, and so in practice is preferably limited to the range 0dB to 5dB.

If an MS served by a neighbour does not list a cell in its MR, it is assumed that the UL_RxLev in this case is the minimum possible.

A distribution of UL_RxLev values obtained over a number of MRs can then be normalised to produce a probability density function.

Taken together with the MRs from the server cell, one obtains a plurality of pdfs; *Ps(S_RxLev),* for uplink receive levels at the serving cell for MSs in the given serving cell, and *Pn(N_RxLev),* for uplink receive levels at the serving cell for MSs from each neighbour *n*.

Additionally, probability functions are defined for each element in the C/I matrix causing unacceptable interference when a co-channel assignment is made *Pc*, and when an adjacent channel assignment is made *Pa*. Example definitions are:

$$Pc(C\_I) \quad = 1 \text{ if } C\_I \leq 9dB$$
$$= 0 \text{ otherwise}$$

$$Pa(C\_I) \quad = 1 \text{ if } C\_I \leq -9dB$$
$$= 0 \text{ otherwise}$$

It will be clear to a person skilled in the art that more sophisticated definitions may be used instead of these examples.

Finally, the amount of uplink interference is also dependent on the likelihood of a mobile station in the neighbouring cell transmitting at the same time as a call is being made in the serving cell, calculated substantially as

$$Nbr\_Clash = \frac{\text{Average number of neighbour's TCHs used in a given period}}{\text{Number of available TCHs in neighbour}}$$

where TCH is traffic channel. Nbr_Clash can be calculated on a per channel basis, and may additionally incorporate call duration. Preferably the given period is a busy period, but it will be clear that different periods may be used.

The proportion of calls on a given server that would be adversely affected by uplink interference caused by co-channel assignment is then substantially calculated as;

$$UL\_CoChannel\_CI = \sum_{S\_RxLev} \sum_{N\_RxLev} Ps(S\_RxLev) \times Pn(N\_RxLev) \times$$
$$Nbr\_Clash \times Pc(S\_RxLev - N\_RxLev)$$

Thus UL_CoChannel_CI is a summation of a two-dimensional function representing the probability of uplink interference given possible values of uplinked receive levels on the server S_RXLev and neighbour N_RxLev, taking into account neighbour traffic density Nbr_Clash and the level of unacceptable interference Pc.

Similarly, the proportion of calls on a given server that would be adversely affected by uplink interference caused by adjacent channel assignment is then substantially calculated as;

$$UL\_Adjacent\_CI = \sum_{S\_RxLev} \sum_{N\_RxLev} Ps(S\_RxLev) \times Pn(N\_RxLev) \times$$

$$Nbr\_Clash \times Pa(S\_RxLev - N\_RxLev)$$

The values can then be used as modifying factors on the C/I penalty matrix to reflect uplink interference.

The C/I penalty matrix, either preceding or following application of the above methods, reflects interference on the broadcast control channel (BCCH), which is typically at a different frequency to the traffic channel (TCH). For example, the BCCH may be at 900MHz while the TCH is at 1800MHz. These different frequencies may experience different propagation conditions. Consequently to reflect differences in signal level between different frequency bands, in an embodiment of the present invention a pre-computed or empirical look-up table may be used to compensate for differing values in the C/I matrix generated for the measured broadcast control channel with respect to other traffic channels.

Finally, the C/I penalty matrix is typically generated from measurement reports obtained during a given survey period. However, it is possible that during that period there were insufficient measurement reports to provide a statistically significant sample for a given C/I element. Such an element may therefore be considered 'unsafe'.

In this circumstance, in an embodiment of the present invention, a corresponding penalty generated during a previous re-planning exercise may be used, assuming the server-neighbour frequency relationships are the same.

The previous penalty may either replace the 'unsafe' value, or an average of the two may be produced. If a record of the number of MRs used to generate the values is available, a weighted average based on the relative safety of the values may be used.

A wireless communication system, comprising a wireless infrastructure supporting communication for a plurality of mobile stations (112-115), is also envisaged. In an embodiment of the present invention, the wireless infrastructure comprises a processor (175) operable to generate a frequency re-use plan in accordance with the methods described above.

Similarly, a communication unit (146, 172) operating in a wireless communication system, is also envisaged. In an embodiment of the present invention, the communication unit (146, 172) comprises a processor (175) operable to generate a frequency re-use plan in accordance with the methods described above.

It will be understood that the system, unit and method of frequency re-planning in a wireless communication system as described above provide at least one or more of the following advantages:

i. Channel/interference (C/I) penalties can be generated even for neighbouring cells sharing the same BCCH frequency;
ii. Uplink traffic interference can be factored into C/I penalty values;
iii. C/I penalties based on an insufficient number of measurement reports can be replaced or amended; and
iv. Different frequency channel conditions can be factored into C/I penalty values.

The above advantages all contribute to improving the quality of frequency replanning provided by a C/I based intelligent optimisation system.

**Claims**

1. A method of frequency re-planning in a wireless communication system, wherein the wireless communication system (100) is arranged to support communication for a plurality of mobile stations (112-115) via a plurality of cells, the method comprising the generation of channel/interference penalties based upon measurement reports, and **characterised by** the step of:

for a first cell having one or more neighbouring co-channel cells for which measurement reports are unavailable, estimating channel/interference penalties for the one or more neighbouring co-channel cells based upon the interference levels of common neighbours of the first cell and the one or more neighbouring co-channel cells.

2. A method of frequency re-planning according to claim 1 wherein the step of estimating channel/interference penalties for the one or more neighbouring co-channel cells comprises;
estimation of co-channel interference (CCI) value between the server s of the first cell and co-channel neighbour n as substantially

$$CCI(s, n) = \sum_i \{CCI(s, i) . CCI(i, n)\}$$

for i common neighbours.

3. A method of frequency re-planning according to any one of claims 1 and 2 wherein the step of estimating channel/interference penalties for the one or more neighbouring co-channel cells further comprises, for the case of only one available co-channel interference value (CCI);
the estimation of a co-channel interference penalty on carrier x of server s of the first cell from carrier y of co-channel neighbour n, with traffic utilisations TU, as substantially

$$penalty(s, x, n, y) = CCI(s, n) * TU(s, x) * TU(n, y) * C$$

where C is a constant, and all the terms of the equation are as defined herein.

4. A method of frequency re-planning according to any one of claims 1 and 2 wherein the step of estimating channel/interference penalties for the one or more neighbouring co-channel cells further comprises, for the case of a plurality $k$ of co-channel interference values corresponding to a plurality $k$ of traffic types;
the estimation of a co-channel interference (CCI) penalty on carrier $x$ of server s of the first cell from carrier $y$ of co-channel neighbour $n$, with traffic utilisations $TU$ as substantially

$$penalty(s, x, n, y) =$$
$$(CCI_1(s, n) * TU_1(s, x) + CCI_2(s, n) * TU_2(s, x) + \ldots + CCI_k(s, n) * TU_k(s, x) )$$
$$* TU(n, y) * C$$

where the terms of the equation are as defined herein.

5. A method of frequency re-planning according to any one of the preceding claims, wherein separate co-channel interference penalties are estimated for separate traffic types.

6. A method of frequency re-planning according to any one of the preceding claims, wherein adjacent-channel interference values (ACI) are used in place of co-channel interference values, an ACI being calculated substantially as

$$ACI(s, n) = \sum_i \{ACI(s, i) . ACI(i, n)\}$$

for i common neighbours, where the terms of the equation are as defined herein.

7. A wireless communication system (100) for supporting communication for a plurality of mobile stationss (112-115) via a plurality of cells, the system comprising a processor (175) operable to generate a frequency re-use plan, the wireless communication system (100) **characterised in that**;
for a first cell having one or more neighbouring co-channel cells for which measurement reports are unavailable, the processor (175) is arranged to estimate in operation channel/interference penalties for the one or more neighbouring co-channel cells based upon the interference levels of common neighbours of the first cell and the one or more neighbouring co-channel cells.

8. A wireless communication system (100) according to claim 7 wherein the processor (175) is arranged to estimate in operation a co-channel interference (CCI) value between the server $s$ of the first cell and co-channel neighbour $n$ as substantially

$$CCI(s, n) = \sum_i \{CCI(s, i).CCI(i, n)\}$$

for i common neighbours.

9. A wireless communication system (100) according to any one of claims 7 or 8 wherein the processor (175) is arranged to estimate in operation, for the case of only one available co-channel interference value (CCI);
a co-channel interference penalty on carrier $x$ of server $s$ of the first cell from carrier $y$ of co-channel neighbour $n$, with traffic utilisations $TU$, as substantially

$$penalty(s, x, n, y) = CCI(s, n) * TU(s, x) * TU(n, y) * C$$

where the terms of the equation are as defined herein.

10. A wireless communication system (100) according to any one of claims 7 or 8 wherein the processor (175) is arranged to estimate in operation, for the case of a plurality $k$ of co-channel interference values corresponding to a plurality $k$ of traffic types;
a co-channel interference (CCI) penalty on carrier $x$ of server $s$ of the first cell from carrier $y$ of co-channel neighbour $n$ with traffic utilisations $TU$ as substantially

$$penalty(s, x, n, y) =$$
$$(CCI_1(s, n) * TU_1(s, x) + CCI_2(s, n) * TU_2(s, x) + \ldots + CCI_k(s, n) * TU_k(s, x))$$
$$* TU(n, y) * C$$

where the terms of the equation are as defined herein.

11. A communication unit (146, 172) operating in a wireless communication system that comprises a plurality of cells, the communication unit **characterised by**:

a processor (175) to facilitate a frequency replanning operation of the wireless communication system, wherein for a first cell having one or more neighbouring co-channel cells for which measurement reports are unavailable, the processor (175) is arranged to estimate channel/interference penalties for the one or more neighbouring co-channel cells based upon the interference levels of common neighbours of the first cell and the one or more neighbouring co-channel cells.

12. A communication unit (146, 172) according to claim 11 wherein in operation the processor (175) is arranged to estimate co-channel interference (CCI) between the server s of the first cell and co-channel neighbour n as substantially

$$CCI(s, n) = \sum_i \{CCI(s, i).CCI(i, n)\}$$

for i common neighbours.

13. A communication unit (146, 172) according to any one of claims 11 and 12 wherein in operation the processor (175) is further arranged to estimate, for the case of only one available co-channel interference value (CCI);
a co-channel interference penalty on carrier x of server s of the first cell from carrier y of co-channel neighbour n, with traffic utilisations TU, as substantially

$$penalty(s, x, n, y) = CCI(s, n) * TU(s, x) * TU(n, y) * C$$

where the terms of the equation are as defined herein.

14. A communication unit (146, 172) according to any one of claims 11 and 12 wherein in operation the processor (175) is further arranged to estimate, for the case of a plurality $k$ of co-channel interference values corresponding to a plurality $k$ of traffic types;

a co-channel interference (CCI) penalty on carrier $x$ of server s of the first cell from carrier $y$ of co-channel neighbour $n$, with traffic utilisation $TU$ as substantially

$$penalty(s, x, n, y) =$$
$$(CCI_1(s, n) * TU_1(s, x) + CCI_2(s, n) * TU_2(s, x) + \ldots + CCI_k(s, n) * TU_k(s, x))$$
$$* TU(n, y) * C$$

where the terms of the equation are as defined herein.

15. A communication unit (146, 172) according to any one of claims 11 to 14 wherein in operation the processor (175) is arranged, for the estimation of co-channel interference penalties, to generate separate co-channel interference penalties for separate traffic types.

16. A communication unit (146, 172) according to any one of claims 11 to 15 wherein in operation the processor (175) is arranged, for the estimation of adjacent-channel interference penalties, to use adjacent-channel interference values (ACI) in place of co-channel interference values, the ACI being calculated substantially as

$$ACI(s, n) = \sum_i \{ACI(s, i) . ACI(i, n)\}$$

for i common neighbours, where the terms of the equation are as defined herein.

## Patentansprüche

1. Verfahren zur Frequenzumplanung in einem drahtlosen Kommunikationssystem, wobei das drahtlose Kommunikationssystem (100) so ausgelegt ist, dass es die Kommunikation für mehrere Mobilstationen (112 - 115) über mehrere Zellen unterstützt, wobei das Verfahren die Erzeugung von KanalInterferenz-Strafen auf der Grundlage von Messberichten umfasst und durch den folgenden Schritt gekennzeichnet ist:

für eine erste Zelle mit einer oder mehreren benachbarten Gleichkanalzellen, für die keine Messberichte zur Verfügung stehen,
Schätzen von Kanal/Interferenz-Strafen für die eine oder die mehreren benachbarten Gleichkanalzellen auf der Grundlage der Interferenzstärken von gemeinsamen Nachbarn der ersten Zelle und der einen oder den mehreren benachbarten Gleichkanalzellen.

2. Verfahren zur Frequenzumplanung nach Anspruch 1, wobei der Schritt des Schätzens von Kanal/Interferenz-Strafen für die eine oder die mehreren benachbarten Gleichkanalzellen umfasst:

Schätzen von Gleichkanalinterferenzwerten (CCI) zwischen dem Server s der ersten Zelle und dem Gleichkanalnachbarn n im Wesentlichen gemäß

$$CCI(s, n) = \sum_i \{CCI(s, i) . CCI(i, n)\}$$

für i gemeinsame Nachbarn.

3. Verfahren zur Frequenzumplanung nach einem der Ansprüche 1 und 2, wobei der Schritt des Schätzens der Kanal/Interferenz-Strafen für den einen oder die mehreren benachbarten Gleichkanalzellen für den Fall, dass nur ein einziger Gleichkanalinterferenzwert (CCI) zur Verfügung steht, außerdem umfasst:

die Schätzung einer Gleichkanalinterferenzstrafe auf dem Träger x des Servers s der ersten Zelle aus dem Träger y des Gleichkanalnachbars n, mit Traffic-Nutzungen TU, im Wesentlichen gemäß

$$penalty(s, x, n, y) = CCI(s, n) * TU(s, x) * TU(n, y) * C$$

wobei C eine Konstante ist und alle Terme der Gleichung wie hier definiert sind.

4. Verfahren zur Frequenzumplanung nach einem der Ansprüche 1 und 2, wobei der Schritt des Schätzens von Kanal/Interferenz-Strafen für den einen oder die mehreren benachbarten Gleichkanalzellen im Fall von mehreren, nämlich k, Gleichkanalinterferenzwerten, denen k Traffic-Typen entsprechen, außerdem umfasst:

die Schätzung einer Gleichkanalinterferenzstrafe (CCI-Strafe) auf dem Träger x des Servers s der ersten Zelle ausgehend von dem Träger y des Gleichkanalnachbars n, mit Traffic-Nutzungen TU im Wesentlichen gemäß

$$
\begin{aligned}
penalty(s, x, n, y) = {} & \\
(CCI_1(s, n) * TU_1(s, x) + CCI_2(s, n) * TU_2(s, x) + \ldots + CCI_k(s, n) * TU_k(s, x)) & \\
* TU(n, y) * C &
\end{aligned}
$$

wobei die Terme der Gleichung wie hier definiert sind.

5. Verfahren zur Frequenzumplanung gemäß einem der vorangehenden Ansprüche, wobei separate Gleichkanalinterferenzstrafen für separate Traffic-Typen geschätzt werden.

6. Verfahren zur Frequenzumplanung gemäß einem der vorangehenden Ansprüche, wobei Interferenzwerte benachbarter Kanäle (ACI-Werte) anstelle von Gleichkanalinterferenzwerten verwendet werden, wobei ein ACI-Wert für i gemeinsame Nachbarn im Wesentlichen gemäß

$$ACI(s, n) = \sum_i \{ACI(s, i) . ACI(i, n)\}$$

berechnet wird, wobei die Terme der Gleichung wie hier definiert sind.

7. Drahtloses Kommunikationssystem (100) zur Unterstützung der Kommunikation für mehrere Mobilstationen (112 - 115) über mehrere Zellen, wobei das System einen Prozessor (175) aufweist, der zur Erzeugung eines Frequenz-Neunutzungsplanes betreibbar ist, wobei das drahtlose Kommunikationssystem (100) **dadurch gekennzeichnet ist, dass**
für eine erste Zelle mit einer oder mehreren benachbarten Gleichkanalzellen, für die keine Messberichte verfügbar sind,
der Prozessor (175) so ausgelegt ist, dass er im Betrieb auf der Grundlage der Interferenzstärken von gemeinsamen Nachbarn der ersten Zelle und der einen oder den mehreren benachbarten Gleichkanalzellen Kanal/Interferenz-Strafen für die eine oder die mehreren benachbarten Gleichkanalzellen schätzt.

8. Drahtloses Kommunikationssystem (100) nach Anspruch 7, wobei der Prozessor (175) so ausgelegt ist, dass er im Betrieb einen Gleichkanalinterferenzwert (CCI-Wert) zwischen dem Server s der ersten Zelle und dem Gleichkanalnachbar n im Wesentlichen gemäß

$$CCI(s, n) = \sum_i \{CCI(s, i) . CCI(i, n)\}$$

für i gemeinsame Nachbarn schätzt.

**9.** Drahtloses Kommunikationssystem (100) nach einem der Ansprüche 7 oder 8, wobei der Prozessor (175) so ausgelegt ist, dass er im Betrieb in dem Fall, dass nur ein einziger Gleichkanalinterferenzwert (CCI) zur Verfügung steht, ausgehend von dem Träger y des Gleichkanalnachbars n eine Gleichkanalinterferenzstrafe auf dem Träger x des Servers s der ersten Zelle schätzt, mit Traffic-Nutzungen TU, im Wesentlichen gemäß

$$\text{penalty}(s, x, n, y) = CCI(s, n) * TU(s, x) * TU(n, y) * C$$

wobei die Terme der Gleichung wie hier definiert sind.

**10.** Drahtloses Kommunikationssystem (100) nach einem der Ansprüche 7 oder 8, wobei der Prozessor (175) so ausgelegt ist, dass er im Betrieb im Fall von mehreren, nämlich k, Gleichkanalinterferenzwerten, die mehreren, nämlich k, Traffic-Typen entsprechen,
ausgehend von dem Träger y des Gleichkanalnachbars n mit Traffic-Nutzungen TU eine Gleichkanalinterferenzstrafe (CCI-Strafe) auf dem Träger x des Servers s der ersten Zelle im Wesentlichen gemäß

$$\text{penalty}(s, x, n, y) =$$
$$(CCI_1(s, n) * TU_1(s, x) + CCI_2(s, n) * TU_2(s, x) + ... + CCI_k(s, n) * TU_k(s, x))$$
$$* TU(n, y) * C$$

schätzt, wobei die Terme der Gleichung wie hier definiert sind.

**11.** Kommunikationseinheit (146, 172), die in einem drahtlosen Kommunikationssystem funktioniert, welches mehrere Zellen umfasst, wobei die Kommunikationseinheit **gekennzeichnet ist durch**:

einen Prozessor (175) zum Erleichtern einer Frequenzumplanungsmaßnahme des drahtlosen Kommunikationssystems, wobei
für eine erste Zelle mit einer oder mehreren benachbarten Gleichkanalzellen, für die keine Messberichte zur Verfügung stehen,
der Prozessor (175) so ausgelegt ist, dass er auf der Grundlage der Interferenzstärken gemeinsamer Nachbarn der ersten Zelle und der einen oder den mehreren benachbarten Gleichkanalzellen Kanal/Interferenz-Strafen für die eine oder die mehreren benachbarten Gleichkanalzellen schätzt.

**12.** Kommunikationseinheit (146, 172) nach Anspruch 11, wobei der Prozessor (175) im Betrieb so ausgelegt ist, dass er die Gleichkanalinterferenz (CCI) zwischen dem Server s der ersten Zelle und dem Gleichkanalnachbar (9) im Wesentlichen gemäß

$$CCI(s, n) = \sum_i \{CCI(s, i) . CCI(i, n)\}$$

für i gemeinsame Nachbarn schätzt.

**13.** Kommunikationseinheit (146, 172) nach einem der Ansprüche 11 und 12, wobei der Prozessor (175) im Betrieb außerdem so ausgelegt ist, dass er in dem Fall, dass nur ein einziger Gleichkanalinterferenzwert (CCI) zur Verfügung steht,
eine Gleichkanalinterferenzstrafe auf dem Träger x des Servers s der ersten Zelle ausgehend von dem Träger y des Gleichkanalnachbars n schätzt, mit Traffic-Nutzungen TU, im Wesentlichen gemäß

$$\text{penalty}(s, x, n, y) = CCI(s, n) * TU(s, x) * TU(n, y) * C$$

wobei die Terme der Gleichung wie hier definiert sind.

**14.** Kommunikationseinheit (146, 172) nach einem der Ansprüche 11 und 12, wobei der Prozessor (175) im Betrieb ferner so ausgelegt ist, dass er im Fall von mehreren, nämlich k, Gleichkanalinterferenzwerten, die mehreren, nämlich k, Traffic-Typen entsprechen,
ausgehend von dem Träger y des Gleichkanalnachbars n eine Gleichkanalinterferenzstrafe (CCI-Strafe) auf dem Träger x des Servers s der ersten Zelle schätzt mit Traffic-Nutzung TU im Wesentlichen gemäß

$$
\begin{aligned}
\text{penalty}(s, x, n, y) &= \\
&(CCI_1(s, n) * TU_1(s, x) + CCI_2(s, n) * TU_2(s, x) + \ldots + CCI_k(s, n) * TU_k(s, x)) \\
&* TU(n, y) * C
\end{aligned}
$$

wobei die Terme der Gleichung wie hier definiert sind.

15. Kommunikationseinheit (146, 172) nach einem der Ansprüche 11 bis 14, wobei der Prozessor (175) im Betrieb so ausgelegt ist, dass er zur Schätzung von Gleichkanalinterferenzstrafen separate Gleichkanalinterferenzstrafen für separate Traffic-Typen erzeugt.

16. Kommunikationseinheit (146, 172) nach einem der Ansprüche 11 bis 15, wobei der Prozessor (175) im Betrieb so ausgelegt ist, dass er zur Schätzung von Interferenzstrafen benachbarter Kanäle Interferenzwerte benachbarter Kanäle (ACI-Werte) anstelle von Gleichkanalinterferenzwerten verwendet, wobei der ACI-Wert im Wesentlichen gemäß

$$
ACI(s, n) = \sum_i \{ACI(s, i) \,. ACI(i, n)\}
$$

für i gemeinsame Nachbarn berechnet wird, wobei die Terme der Gleichung wie hier definiert sind.

## Revendications

1. Procédé de réaménagement de fréquences dans un système de communication sans fil, le système de communication sans fil (100) étant agencé de manière à supporter la communication pour plusieurs stations mobiles (112 - 115) par plusieurs cellules, le procédé comportant la génération de pénalités voie/brouillage sur la base de rapports de mesure, et **caractérisé par** l'étape suivante :

   pour une première cellule qui comporte une ou plusieurs cellules voisines de la même voie et pour lesquelles des rapports de mesure ne sont pas disponibles,
   estimation de pénalités voie/interférence pour la ou les cellules voisines de la même voie sur la base de niveaux de brouillage de voisins communs de la première cellule et de la ou des cellules voisines de la même voie.

2. Procédé de réaménagement de fréquences selon la revendication 1, dans lequel l'étape d'estimation de pénalités voie/interférence pour la ou les cellules voisines de la même voie comporte :

   l'estimation de valeurs du brouillage dans la même voie (valeurs CCI) entre le serveur s de la première cellule et du voisin n de la même voie substantiellement comme

$$
CCI(s, n) = \sum_i \{CCI(s, i) \,. CCI(i, n)\}
$$

   pour i voisins communs.

3. Procédé de réaménagement de fréquences selon l'une des revendications 1 et 2, l'étape d'estimation de pénalités voie/brouillage pour la ou les cellules voisines de la même voie comportant en plus, dans le cas où une seule valeur du brouillage dans la même voie est disponible,
   l'estimation d'une pénalité du brouillage dans la même voie sur la porteuse x du serveur s de la première cellule à partir de la porteuse y du voisin n de la même voie, avec des utilisations de trafic TU, substantiellement comme

$$\text{pénalité}(s, x, n, y) = CCI(s, n) * TU(s, x) * TU(n, y) * C$$

où C est une constante et tous les termes de l'équation sont tels que définis aux présentes.

4. Procédé de réaménagement de fréquences selon l'une des revendication 1 et 2, l'étape d'estimation de pénalités voie/brouillage pour la ou les cellules voisines de la même voie comportant en plus, dans le cas de plusieurs, soit k, valeurs du brouillage dans la même voie, qui correspondent à plusieurs, soit k, types de trafic, l'estimation d'une pénalité du brouillage dans la même voie (CCI) sur la porteuse x du serveur s de la première cellule à partir de la porteuse y du voisin n de la même voie, avec des utilisations de trafic TU substantiellement comme

$$\text{pénalité}(s, x, n, y) =$$
$$(CCI_1(s, n) * TU_1(s, x) + CCI_2(s, n) * TU_2(s, x) + ... + CCI_k(s, n) * TU_k(s, x))$$
$$* TU(n, y) * C$$

où les termes de l'équation sont tels que définis aux présentes.

5. Procédé de réaménagement de fréquences selon l'une des revendications précédentes, dans lequel des pénalités individuelles du brouillage dans la même voie sont estimées pour des types de trafic individuels.

6. Procédé de réaménagement de fréquences selon l'une des revendications précédentes, dans lequel des valeurs de brouillage de voies adjacentes (valeurs ACI) sont utilisées au lieu de valeurs du brouillage dans la même voie, une valeur ACI étant calculée substantiellement comme

$$ACI(s, n) = \sum_i \{ACI(s, i) . ACI(i, n)\}$$

pour i voisins communs, les termes de l'équation étant tels que définis aux présentes.

7. Système de communication sans fil (100) pour supporter la communication pour plusieurs stations mobiles (112 - 115) par plusieurs cellules, le système comportant un processeur (175) qui est opérable de manière à générer un plan de réutilisation de fréquences, le système de communication sans fil étant **caractérisé en ce que** pour une première cellule qui possède une ou plusieurs cellules voisines de la même voie pour lesquelles des rapports de mesure ne sont pas disponibles, le processeur (175) est agencé de manière à estimer, quand il est en service, des pénalités voie/brouillage pour la ou les cellules voisines de la même voie sur la base de niveaux de brouillage de voisins communs de la première cellule et de la ou des cellules voisines de la même voie.

8. Système de communication sans fil (110) selon la revendication 7, dans lequel le processeur (175) est agencé de manière à estimer, quand il est en service, une valeur du brouillage dans la même voie (valeur CCI) entre le serveur s de la première cellule et le voisin n de la même voie substantiellement comme

$$CCI(s, n) = \sum_i \{CCI(s, i) . CCI(i, n)\}$$

pour i voisins communs.

9. Système de communication sans fil (100) selon l'une des revendications 7 et 8, dans lequel le processeur (175) est agencé de manière à estimer, quand il est en service, dans le cas où une seule valeur du brouillage dans la même voie est disponible, une pénalité du brouillage dans la même voie (pénalité CCI) sur la porteuse x du serveur s de la première cellule à partir de la porteuse y du voisin n de la même voie avec des utilisations de trafic TU substantiellement comme

$$\text{pénalité}(s, x, n, y) = CCI(s, n) * TU(s, x) * TU(n, y) * C$$

où les termes de l'équation sont tels que définis aux présentes.

10. Système de communication sans fil (100) selon l'une des revendications 7 et 8, dans lequel le processeur (175) est agencé de manière à estimer, quand il est en service, dans le cas de plusieurs, soit k, valeurs du brouillage dans la même voie qui correspondent à plusieurs, soit k, types de trafic,
une pénalité du brouillage dans la même voie (pénalité CCI) sur la porteuse x du serveur s de la première cellule à partir de la porteuse y du voisin n de la même voie avec des utilisations de trafic TU substantiellement comme

$$\text{pénalité}(s, x, n, y) =$$
$$(CCI_1(s, n) * TU_1(s, x) + CCI_2(s, n) * TU_2(s, x) + \ldots + CCI_k(s, n) * TU_k(s, x))$$
$$* TU(n, y) * C$$

où les termes de l'équation sont tels que définis aux présentes.

11. Unité de communication (146, 172) qui fonctionne dans un système de communication sans fil qui comporte plusieurs cellules, l'unité de communication étant **caractérisée par**:

un processeur (175) pour faciliter une opération de réaménagement de fréquences du système de communications sans fil, dans lequel
pour une première cellule qui possède une ou plusieurs cellules voisines de la même voie pour lesquelles des rapports de mesure ne sont pas disponibles,
le processeur (175) est agencé de manière à estimer des pénalités voie/brouillage pour la ou les cellules voisines de la même voie sur la base de niveaux de brouillage de voisins commun de la première cellule et de la ou des cellules voisines de la même voie.

12. Unité de communication (146, 172) selon la revendication 11, dans laquelle, quand elle est en service, le processeur (175) est agencé de manière à estimer le brouillage dans la même voie (CCI) entre le serveur s de la première cellule et le voisin n de la même voie substantiellement comme

$$CCI(s, n) = \sum_i \{CCI(s, i) . CCI(i, n)\}$$

pour i voisins communs.

13. Unité de communication (146, 172) selon l'une des revendications 11 et 12, dans laquelle, quand elle est en service, le processeur (175) est agencé en plus de manière à estimer, dans le cas où une seule valeur du brouillage dans la même voie (valeur CCI) est disponible, une pénalité du brouillage dans la même voie sur la porteuse x du serveur s de la première cellule à partir de la porteuse y du voisin n de la même voie, avec des utilisations de trafic TU, substantiellement comme

$$\text{pénalité}(s, x, n, y) = CCI(s, n) * TU(s, x) * TU(n, y) * C$$

où les termes de l'équation sont tels que définis aux présentes.

14. Unité de communication (146, 172) selon l'une des revendications 11 ou 12, dans laquelle, quand il est en service, le processeur (175) est agencé en plus de manière à estimer, dans le cas de plusieurs, soit k, valeurs du brouillage dans la même voie qui correspondent à plusieurs, soit k, types de trafic, une pénalité du brouillage dans la même voie (pénalité CCI) sur la porteuse x du serveur s de la première cellule à partir de la porteuse y de la voisine n de la même voie, avec des utilisations de trafic TU substantiellement comme

$$\begin{aligned} \text{pénalité}(s, x, n, y) = \\ (CCI_1(s, n) * TU_1(s, x) + CCI_2(s, n) * TU_2(s, x) + \ldots + CCI_k(s, n) * TU_k(s, x)) \\ * TU(n, y) * C \end{aligned}$$

où les termes de l'équation sont tels que définis aux présentes.

**15.** Unité de communication (146, 172) selon l'une des revendications 11 à 14, dans laquelle, quand elle est en service, le processeur (175) est agencé, pour l'estimation de pénalités du brouillage dans la même voie, de manière à générer des pénalités individuelles du brouillage dans la même voie pour des types de trafic individuels.

**16.** Unité de communication (146, 172) selon l'une des revendications 11 à 15, dans laquelle, quand il est en service, le processeur (175) est agencé, pour l'estimation de pénalités de brouillage de voies adjacentes, de manière à utiliser des valeurs de brouillage de voies adjacentes au lieu des valeurs du brouillage dans la même voie (valeur ACI), les valeurs ACI étant calculées substantiellement comme

$$ACI(s, n) = \sum_{i} \{ACI(s, i) . ACI(i, n)\}$$

pour i voisins communs, où les termes de l'équation sont tels que définis aux présentes.

**EP 1 733 567 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2332600 A